# FASCICULE DE BREVET EUROPEEN

(11) **EP 3 174 926 B1**
(45) Date de publication et mention de la délivrance du brevet: **20.07.2022**
(21) Numéro de dépôt: 15752943.9
(22) Date de dépôt: 29.07.2015
(51) Int. Cl.: C08L 95/00, C08K 5/09, C08K 5/16, C08K 5/092, C08K 5/25

(54) **PROCEDE DE TRANSPORT ET/OU DE STOCKAGE DE BITUME ROUTIER**
VERFAHREN ZUM TRANSPORTIEREN UND/ODER LAGERN VON STRASSENASPHALT
METHOD FOR THE TRANSPORTATION AND/OR STORAGE OF ROAD BITUMEN

(30) Priorité: 01.08.2014 FR 1457537
(43) Date de publication de la demande: 07.06.2017
(73) Titulaire: TotalEnergies OneTech, 92400 Courbevoie (FR)
(72) Inventeur: VINCENT, Régis, F-69520 Grigny (FR); MOUAZEN, Mouhamad, F-69008 Lyon (FR); LAPALU, Laurence, F-69100 Villeurbanne (FR)
(74) Mandataire: Corizzi, Valérie
(86) Numéro de dépôt international: PCT/EP2015/067409
(87) Numéro de publication internationale: WO 2016/016320

(56) Documents cités:
- WO-A1-2014/005935
- US-A- 2 387 514
- US-A1- 2013 041 075
- "Studies in Ancient Technology ED - Forbes; Robert J", 1 janvier 1993 (1993-01-01), STUDIES IN ANCIENT TECHNOLOGY (THIRD EDITION), E.J. BRILL, PAGE(S) 1 - 124, XP007922201, ISBN: 90-04-00621-4 le document en entier
- A. NISSENBAUM ET AL: "The floating asphalt blocks of the Dead Sea", PHYSICS AND CHEMISTRY OF THE EARTH, vol. 12, 1 janvier 1980 (1980-01-01), pages 157-161, XP055184901, ISSN: 0079-1946, DOI: 10.1016/0079-1946(79)90098-3
- Lucy Cramp ET AL: "Molecules from the past, Archaeology meets chemistry", Catalyst, 1 février 2010 (2010-02-01), pages 1-4, XP055074661, Extrait de l'Internet: URL:http://www.catalyststudent.org.uk/dl/d 9a28a19d5607b9275ba9bd3c721270f7c0a2733/53 -catalyst_20_3_444.pdf [extrait le 2013-08-09]

## Description

### DOMAINE TECHNIQUE

La présente invention a pour objet un procédé de transport et/ou de stockage d'un bitume routier. La présente invention concerne également l'utilisation de pain de bitume selon l'invention comme liant routier ainsi que leur utilisation pour la fabrication d'enrobés.

### ETAT DE L'ART

La grande majorité du bitume est utilisée en construction, principalement pour la fabrication de chaussées routières ou dans l'industrie, par exemple pour des applications de toiture. Il se présente généralement sous la forme d'un matériau noir fortement visqueux, voire solide à température ambiante, qui se fluidifie en chauffant. De manière générale, le bitume est stocké et transporté à chaud, en vrac, dans des camions-citernes ou par bateaux à des températures élevées de l'ordre de 120°C à 160°C. Or le stockage et le transport du bitume à chaud présente certains inconvénients. D'une part, le transport du bitume à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, le bitume pourra devenir visqueux durant un trajet trop long. Les distances de livraison du bitume sont donc limitées. D'autre part, le maintien du bitume à des températures élevées dans les cuves ou dans les camions-citernes consomme de l'énergie. En outre, le maintien en température du bitume pendant une période donnée peut affecter les propriétés du bitume, notamment les propriétés de vieillissement et ainsi changer les performances finales de l'enrobé.

Pour pallier les problèmes de transport et de stockage du bitume à chaud, des solutions de transport et de stockage en conditionnement à froid ont été développées. Ce mode de transport du bitume en conditionnement à froid ne représente qu'une fraction minime des quantités transportées dans le monde, mais il correspond à des besoins bien réels pour les régions géographiques d'accès difficile et coûteux par les moyens de transport traditionnels.

A titre d'exemple on peut citer le transport du bitume à température ambiante dans des fûts métalliques. Ce moyen est de plus en plus contestable d'un point de vue environnemental car le bitume froid stocké dans les fûts doit être réchauffé avant son utilisation comme liant routier. Or cette opération est difficile à mettre en œuvre pour ce type de conditionnement et les fûts constituent un déchet après utilisation. D'autre part, le stockage du bitume à froid dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

Le conditionnement des produits bitumineux dans des sacs en papier ou en matériau thermoplastique, tel que le polypropylène ou le polyéthylène, a fait l'objet de développements récents. A titre d'exemple, la demande de brevet US 2011/0290695 décrit un système de distribution et de conditionnement de produits bitumineux sous forme de blocs. Chaque bloc de bitume est entouré par un film de composition bitumineuse constitué d'environ 10 à 30% en poids de bitume naturel et d'environ 5 à 25% en poids d'un élastomère synthétique et de copolymères. Le film de composition bitumineuse est fondu avec le produit bitumineux et est entièrement compatible avec le bitume en fusion.

Or, il a été constaté que les produits bitumineux conditionnés sous forme de sacs papier ou en matériau thermoplastique peuvent fluer durant leur manipulation, leur stockage et leur transport, car les sacs ou les films en matériau thermoplastique peuvent se percer augmentant les risques de déformation et de fuite notamment lorsque la température extérieure est élevée. Lorsque les sacs ou les films en matériau thermoplastique sont transpercés, le bitume s'écoule et les sacs ou les blocs entourés de film en matériau thermoplastique collent entre eux. La manipulation des sacs ou des blocs entourés de film en matériau thermoplastique ainsi détériorés devient impossible, ce qui les rend inutilisables.

Malgré le développement récent des conditionnements de produits bitumineux, il existe toujours un besoin de trouver une solution de stockage et de transport des bitumes routiers et matériaux bitumineux à froid permettant de remédier aux inconvénients cités ci-dessus.

En particulier, le but de la présente invention est de proposer un procédé de transport et/ou de stockage à froid amélioré.

Un autre objectif de l'invention est de proposer un procédé permettant une manipulation facile du bitume routier lors des opérations de manutention.

Un autre objectif de l'invention est de proposer un procédé écologique et économique pour transporter le bitume routier et éviter l'utilisation de moyens supplémentaires pour le maintien en température dudit bitume lors du transport et/ou du stockage.

Un autre objectif de l'invention est de proposer un procédé écologique permettant de minimiser la présence de déchets et/ou de résidus.

### OBJET DE L'INVENTION

L'objet de l'invention concerne un procédé de transport et/ou de stockage de bitume routier à froid, ledit procédé comprenant la fabrication de pains de bitume à partir du bitume routier puis le transport et/ou le stockage sous forme de pain de bitume, le bitume routier comprenant : : - au moins une base bitume ayant une pénétrabilité, mesurée à 25°C selon la norme EN 1426, comprise entre 5 et 300 1/10 mm, et
- de 0,1% à 30% en masse d'au moins un additif chimique choisi parmi :
   - un composé diacide de formule générale : HOOC-C_{w}H_{2w}-COOH dans laquelle w est un entier variant de 4 à 22, et
   - un composé de formule générale (**II)** : RCONH-NHCO-R' dans laquelle:
- R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes.

On entend par bitume routier, les compositions bitumineuses constituées d'une ou de plusieurs bases bitume et comprenant un ou plusieurs additifs chimiques, lesdites compositions étant destinées à une application routière.

Selon un mode de réalisation particulier, le bitume routier est transporté et/ou stocké à une température inférieure à 100°C. En particulier, la température de transport et/ou de stockage correspond à la température ambiante. On entend par température ambiante, la température qui est atteinte lors du transport et/ou de stockage du bitume selon l'invention sans que ledit bitume soit chauffé par tout type de procédé. Ainsi, la température ambiante peut atteindre des températures élevées, inférieure à 100°C durant les périodes estivales, en particulier dans les régions géographiques à climat chaud.

Selon un mode de réalisation particulier préférentiel, le bitume est transporté et/ou stocké à une température comprise entre 20°C et 90°C, de préférence comprise entre 20°C et 80°C, plus préférentiellement comprise entre 40°C et 80°C, encore plus préférentiellement comprise entre 50°C et 70°C, encore plus préférentiellement comprise entre 40°C et 60°C.

Selon un mode de réalisation particulier, l'additif chimique est un composé diacide de formule générale HOOC-C_{w}H_{2w}-COOH dans laquelle w est un entier variant de 4 à 22, de préférence de 4 à 12.

Avantageusement, le composé est un diacide choisi parmi le groupe constitué par l'acide adipique, l'acide pimélique, l'acide subérique, l'acide azélaique, l'acide sébacique, l'acide undécanedioïque, l'acide 1,12-dodécanedioïque et l'acide tétradécanedioïque.

Selon un mode de réalisation particulier, l'additif chimique est un composé de formule générale (**II)** : R-CONH-NHCO-R' dans laquelle:
- R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes .

Avantageusement, les groupements R et/ou R', identiques ou différents, comprennent un ou plusieurs cycles ou hétérocycles mono- ou polycycliques aromatiques éventuellement substitués par une ou plusieurs fonctions hydroxyle et/ou une ou plusieurs chaînes hydrocarbonées saturées, linéaires ou ramifiées, ayant de 1 à 6 atomes de carbone.

Selon un mode de réalisation particulier préférentiel, les groupements R et/ou R', identiques ou différents, comprennent une chaîne hydrocarbonée aliphatique de 4 à 22 atomes de carbone, notamment choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

Selon un mode de réalisation particulier, le bitume routier comprend de 0,1% à 5% en masse, de préférence de 0,5% à 4% en masse, plus préférentiellement de 0,5% à 2,5% en masse de l'additif chimique par rapport à la masse totale dudit bitume.

Selon un autre mode de réalisation particulier, le bitume routier comprend de 5% à 30% en masse, de préférence de 6% à 28% en masse, plus préférentiellement de 7% à 26% en masse de l'additif chimique par rapport à la masse totale dudit bitume.

Selon un mode de réalisation particulier, le bitume routier comprend entre 0,05% et 15% en masse, de préférence entre 0,1% et 10% en masse, plus préférentiellement entre 0,5% et 6% en masse d'un adjuvant polymère oléfinique.

L'objet de l'invention concerne également l'utilisation de pain de bitume comme liant routier, ledit pain de bitume étant constitué de bitume routier tel que décrit dans le procédé selon l'invention.

Selon un mode de réalisation particulier, le pain de bitume est utilisé pour la fabrication d'enrobés, ledit pain de bitume étant constitué de bitume routier tel que décrit dans le procédé selon l'invention.

L'objet de l'invention concerne également un procédé de fabrication de liant routier, comprenant le transport et/ou le stockage de bitume sous forme de pains de bitume et l'utilisation de ces pains de bitume comme liant routier.

### DESCRIPTION DETAILLEE

Selon un mode de réalisation particulier, on prépare un bitume routier en mettant en contact :
- au moins une base bitume,
- entre 0,1% et 5% en masse, de préférence entre 0,5% et 4% en masse, plus préférentiellement entre 0,5% et 2,5% en masse d'un additif chimique.

Selon un autre mode de réalisation particulier, on prépare un bitume routier en mettant en contact :
- au moins une base bitume,
- entre 5% et 30% en masse, de préférence entre 6% et 28% en masse, plus préférentiellement entre 7% et 26% en masse de l'additif chimique par rapport à la masse totale dudit bitume.

Au sens de l'invention, lorsque le bitume routier comprend entre 5% et 30% en masse, de préférence entre 6% et 28% en masse, plus préférentiellement entre 7% et 26% en masse de l'additif chimique par rapport à la masse totale dudit bitume, ledit bitume routier peut également s'appeler bitume routier concentré.

Dans la suite de la description, les pourcentages massiques sont calculés par rapport à la masse totale du bitume.

On opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la base bitume avant mélange ainsi que la température de mélange. La température et la durée du chauffage varient selon la quantité de bitume utilisée et sont définies par la norme NF EN 12594.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélange de bases bitumes provenant du raffinage du pétrole brut, en particulier des bases bitumes contenant des asphaltènes. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou. Les bases bitumes ont une pénétrabilité, mesurée à 25°C selon la norme EN 1426, comprise entre 5 et 300 1/10 mm, de préférence entre 10 et 100 1/10 mm, plus préférentiellement entre 30 et 100 1/10 mm.

L'additif chimique peut être un composé diacide de formule générale HOOC-C_{w}H_{2w}-COOH où w est un entier variant de 4 à 22, de préférence de 4 à 12.

Les diacides préférés sont les suivants :
- l'acide adipique ou acide 1,6-hexanedioïque avec w = 4
- l'acide pimélique ou acide 1,7-heptanedioïque avec w = 5
- l'acide subérique ou acide 1,8-octanedioïque avec w = 6
- l'acide azélaique ou acide 1,9-nonanedioïque avec w = 7
- l'acide sébacique ou acide 1,10-decanedioïque avec w = 8
- l'acide undécanedioïque avec w = 9
- l'acide 1,12-dodécanedioïque avec w = 10
- l'acide tétradécanedioïque avec w = 12.

Avantageusement, le diacide est l'acide sébacique.

Les diacides peuvent aussi être des dimères diacide d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacide d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

L'additif chimique peut également être un composé de formule générale (**II)** suivante :

R-CONH-NHCO-R'

dans laquelle:
- R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes;

De préférence, les groupements R et/ou R', identiques ou différents, sont des chaînes hydrocarbonées linéaires, saturées comprenant de 4 à 22 atomes de carbone. Parmi les chaînes hydrocarbonées linéaires, saturées préférées, on peut citer les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

Parmi les composés préférés selon l'invention, on peut citer les dérivés hydrazides répondant aux formules suivantes:

C₅H₁₁-CONH-NHCO-C₅H₁₁

C₉H₁₉-CONH-NHCO-C₉H₁₉

C₁₁H₂₃-CONH-NHCO-C₁₁H₂₃

C₁₇H₃₅-CONH-NHCO-C₁₇H₃₅

C₂₁H₄₃-CONH-NHCO-C₂₁H₄₃.

On peut également citer comme dérivé hydrazide, le 2',3-bis[[3-[3,5-di-tert-butyl-4-hydroxyphenyl]propionyl]] propionohydrazide,

Selon un mode de réalisation particulier, le bitume routier comprend de 0,1% à 5% en masse, de préférence de 0,5% à 4% en masse, plus préférentiellement de 0,5% à 2,5% en masse de l'additif chimique par rapport à la masse totale dudit bitume.

Selon un autre mode de réalisation particulier, le bitume routier comprend de 5% à 30% en masse, de préférence de 6% à 28% en masse, plus préférentiellement de 7% à 26% en masse de l'additif chimique par rapport à la masse totale dudit bitume.

Selon un mode de réalisation particulier, on prépare un bitume routier en mettant en contact :
- au moins une base bitume,
- entre 0,1% et 5% en masse, de préférence entre 0,5% et 4% en masse, plus préférentiellement entre 0,5% et 2,5% en masse d'un additif chimique,
- et entre 0,05% et 15% en masse, de préférence entre 0,1% et 10% en masse, plus préférentiellement entre 0,5% et 6% en masse d'un adjuvant polymère oléfinique.

Selon un autre mode de réalisation particulier, on prépare un bitume routier en mettant en contact :
- au moins une base bitume,
- entre 5% et 30% en masse, de préférence entre 6% et 28% en masse, plus préférentiellement entre 7% et 26% en masse de l'additif chimique par rapport à la masse totale dudit bitume,
- et entre 0,05% et 15% en masse, de préférence entre 0,1% et 10% en masse, plus préférentiellement entre 0,5% et 6% en masse d'un adjuvant polymère oléfinique.

La base bitume et l'additif chimique sont tels que décrits ci-dessus.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B. Le monomère A est choisi parmi l'acétate de vinyle et les acrylates ou méthacrylates d'alkyle en C₁ à C₆.
   Le monomère B est choisi parmi l'acrylate de glycidyle et le méthacrylate de glycidyle.
   Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.
(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

L'adjuvant polymère oléfinique est, de préférence, choisi parmi les terpolymères (b) éthylène/monomère A/monomère B décrits ci-dessus.

Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation particulier, le bitume comprend de 0,05% à 15% en masse, de préférence de 0,1% à 10% en masse, plus préférentiellement de 0,5% à 6% en masse de l'adjuvant polymère oléfinique par rapport à la masse totale dudit bitume.

Les quantités de l'additif chimique et, éventuellement, de l'adjuvant polymère oléfinique sont ajustées en fonction de la nature de la base bitume utilisée. En particulier, la pénétrabilité visée est de préférence comprise entre 20 et 45 1/10mm et la température de ramollissement bille et anneau (TBA) visée est, de préférence, supérieure à 90°C, étant entendu que la pénétrabilité est mesurée à 25°C selon la norme EN 1426 et la TBA selon la norme EN 1427.

Selon un mode de réalisation particulier préféré, le bitume routier comprend une combinaison de l'additif chimique de formule (**II)** et l'adjuvant polymère oléfinique décrits ci-dessus.

On préférera la combinaison dans laquelle l'adjuvant polymère oléfinique est choisi parmi les terpolymère (b) éthylène/monomère A/monomère B décrits ci-dessus.

Plus préférentiellement, le bitume routier comprend l'additif chimique de formule (**II)** et l'adjuvant polymère oléfinique choisi parmi les terpolymères (b) éthylène/monomère A/monomère B décrits ci-dessus.

Le bitume routier tel que décrit ci-dessus peut également contenir d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS^{∗} (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO2007/058994, WO2008/137394 et par la demanderesse dans la demande de brevet WO2011/013073.

Selon un mode de réalisation particulier, le bitume routier est constitué uniquement d'une ou de plusieurs bases bitumes et d'un ou de plusieurs additifs chimiques tels que décrits ci-dessus.

L'objet de l'invention concerne un procédé de transport et/ou de stockage d'un bitume routier à froid, ledit bitume étant transporté et/ou stocké sous forme de pain de bitume. Le bitume est tel que décrit ci-dessus.

On entend par transport et/ou stockage à froid, un transport et/ou un stockage à une température inférieure à 100°C, de préférence à une température ambiante inférieure à 100°C. La température est, de préférence, comprise entre 20°C et 90°C, de préférence comprise entre 20°C et 80°C, plus préférentiellement comprise entre 40°C et 80°C, encore plus préférentiellement comprise entre 50°C et 70°C, encore plus préférentiellement comprise entre 40°C et 60°C.

On entend par pain de bitume, un bloc de bitume routier ayant une masse comprise entre 1 kg et 1000 kg, de préférence, entre 1 kg et 200 kg, plus préférentiellement entre 1 kg et 50 kg, encore plus préférentiellement entre 5 kg et 25 kg, encore plus préférentiellement entre 10 kg et 30 kg, ledit bloc étant avantageusement parallélépipédique, de préférence étant un pavé.

Le pain de bitume a, de préférence, un volume compris entre 1000 cm³ et 50000 cm³, de préférence entre 5000 cm³ et 25000 cm³, plus préférentiellement entre 10000 cm³ et 30000 cm³, encore plus préférentiellement entre 14000 cm³ et 25000 cm³.

Lorsque le pain de bitume est manipulé manuellement par une personne, la masse du pain de bitume peut varier de 1 à 20 kg, et de 20 à 50 kg dans le cas d'une manutention par deux personnes. Lorsque la manutention est réalisée par des équipements mécaniques, la masse du pain de bitume peut varier de 50 à 1000 kg.

Le pain de bitume est fabriqué à partir du bitume routier tel que décrit ci-dessus selon tout procédé connu industriellement, par exemple par extrusion, par moulage, ou selon le procédé de fabrication décrit dans le document US2011/0290695.

Le pain de bitume est avantageusement emballé d'un film thermofusible selon tout procédé connu, de préférence par un film en polypropylène, polyéthylène ou un mélange de polyéthylène et polypropylène. Le bitume conditionné en pain de bitume emballé d'un film thermofusible présente l'avantage d'être prêt à l'emploi c'est-à-dire qu'il peut être directement chauffé dans le fondoir sans déballage préalable ou éventuellement introduit directement dans l'unité d'enrobage de fabrication des enrobés routiers. Le matériau thermofusible qui fond avec le bitume n'affecte pas les propriétés dudit bitume.

Le pain de bitume peut également être conditionné dans un carton selon tout procédé connu.

En particulier, le pain de bitume est conditionné dans un carton en faisant couler à chaud le bitume dans un carton dont la paroi de la face interne est siliconée puis refroidit, les dimensions du carton étant adaptées au poids et/ou volume du pain de bitume souhaité.

Lorsque le pain de bitume selon l'invention est emballé d'un film thermofusible ou est conditionné dans un carton, la demanderesse a démontré que la détérioration dudit film thermofusible ou dudit carton lors du transport et/ou du stockage à froid dudit pain de bitume n'entrainait pas le fluage du bitume. Par conséquent, les pains de bitume selon l'invention conservent leur forme initiale et ne collent pas entre eux lors de leur transport et/ou stockage à froid malgré le fait que le film thermofusible ou le carton soit endommagé. L'absence de fluage du bitume sous forme de pain lors de son transport et/ou stockage à froid est due à la présence d'au moins un additif chimique de formule (I) ou (II) au sein du bitume.

L'objet de l'invention concerne également l'utilisation de pain de bitume tel que décrit ci-dessus comme liant routier.

De manière générale, lorsque le pain de bitume selon l'invention est composé de bitume routier concentré, celui-ci est fondu puis dilué avec au moins une autre base bitume non additivée afin d'obtenir un bitume routier pouvant être utilisé comme liant routier.

Le liant routier peut à son tour être employé pour fabriquer des enrobés, en association avec des granulats selon tout procédé connu. Les enrobés bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant et des granulats du type du sable).

Les pains de bitume selon la présente invention sont remarquables en ce qu'ils permettent le transport et/ou le stockage de bitume routier à froid dans des conditions optimales, en particulier sans qu'il y ait fluage desdits pains lors de leur transport et/ou le stockage, même lorsque la température ambiante est élevée et sans dégrader les propriétés dudit bitume routier pour une application routière, voire en les améliorant.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Exemples

Les caractéristiques rhéologiques et mécaniques des bitumes auxquelles on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10 mm | NF EN 1426 |
| Température de ramollissement bille et anneau | TBA | °C | NF EN 1427 |
| Viscosité Cylindre | η | Pa.s | NF EN 13702 |

### Bitumes B_{1,} B₂, B₃, B_{4,} B₉, B₁₀, B₁₁, B₁₂, B₁₃, B₁₄ et B₁₅

Différents bitumes **B₁**, **B₂**, **B₃**, **B₄**, **B₉**, **B₁₀**, **B₁₁**, **B₁₂**, **B₁₃**, **B₁₄** et **B₁₅** sont préparés à partir des produits suivants :
- une base bitume de grade 35/50, notée **B₀**, ayant une pénétrabilité P₂₅ de 34 1/10 mm et une TBA de 54,4°C et disponible commercialement auprès du groupe TOTAL sous la marque AZALT^{®} ;
- une base bitume de grade 50/70, notée **B₅**, ayant une pénétrabilité P₂₅ de 58 1/10 mm et une TBA de 52°C et disponible commercialement auprès du groupe TOTAL sous la marque AZALT^{®} ;
- une base bitume de grade 50/70, notée **B₆**, ayant une pénétrabilité P₂₅ de 55 1/10 mm et une TBA de 49,6°C et disponible commercialement auprès du groupe TOTAL sous la marque AZALT^{®} ;
- une base bitume de grade 13/40 aux polymères réticulée, notée **B₇**, ayant une pénétrabilité P₂₅ de 47 1/10 mm et une TBA de 66,4°C, disponible commercialement auprès du groupe TOTAL sous la marque STYRELF^{®} ;
- une base bitume de grade 30/45, notée **B₈**, ayant une pénétrabilité P₂₅ de 37 1/10 mm et une TBA de 81,2°C, disponible commercialement auprès du groupe TOTAL sous la marque ALTEK PM 30/45^{®} ;
- un copolymère diséquencé styrène/butadiène, noté **SB,** ayant une quantité en masse de styrène de 30% par rapport à la masse du copolymère, commercialisé par la société KRATON sous le nom D1184 A ;
- une cire Fischer-Tropsch disponible commercialement auprès de la société SASOL sous la marque Sasobit^{®} ;
- l'acide sébacique ;
- un additif chimique, le 2',3-bis[[3-[3,5-di-tert-butyl-4-hydroxyphenyl]propionyl]] propionohydrazide, noté **hydrazide.**

Les quantités en pourcentage massique utilisées pour chaque bitume sont indiquées dans le tableau 2 ci-dessous.

**Tableau 2**

| Bitume | **B₁ (témoin)** | **B₂ (témoin)** | **B₃** | **B₄** | **B₉** | **B₁₀** | **B₁₁** | **B₁₂** | **B₁₃** | **B₁₄** | **B₁₅** |
|---|---|---|---|---|---|---|---|---|---|---|---|
| Base bitume **B₀** | 95% | 96,5% | 98,6% | 99,15% | - | - | - | - | - | - | - |
| Base bitume **B₅** | - | - | - | - | 98,5% | 98,4% | - | - | - | 92,5% | 75% |
| Base bitume **B₆** | - | - | - | - | - | - | 98,5% | - | - | - | - |
| Base bitume **B₇** | - | - | - | - | - | - | - | 98,5% | - | - | - |
| Base bitume **B₈** | - | - | - | - | - | - | - | - | 98,5% | - | - |
| SB | 5% | - | - | - | - | - | - | - | - | - | - |
| Sasobit^{®} | - | 3,5% | - | - | - | - | - | - | - | - | - |
| Acide sébacique | - | - | 1,4% | - | 1,5% | 1,6% | 1,5% | 1,5% | 1,5% | 7,5% | 25% |
| Hydrazide | - | - | - | 0,85% | - | - | - | - | - | - | - |
| P₂₅ (1/10 mm) | 27 | 28 | 25 | 29 | 31 | 26 | 31 | 36 | 37 | 29 | 27 |
| TBA (°C) | 95 | 86 | 109 | 106 | 93 | 96,5 | 112,5 | 69 | 81,2 | 103 | 84 |

La quantité d'additifs pour chaque bitume est ajustée de manière à obtenir des bitumes ayant des propriétés mécaniques équivalentes, notamment une pénétrabilité P₂₅ et une TBA proches.

Les bitumes sont préparés de la manière suivante.

Pour le bitume **B₁**, on introduit dans un réacteur maintenu à 185°C et sous agitation à 300 tours/min, la base bitume **B₀** et le copolymère SB. Le contenu du réacteur est ensuite maintenu à 185°C sous agitation à 300 tours/min pendant 4 heures.

Pour le bitume **B₂**, on introduit la base bitume **B₀** dans un réacteur maintenu à 165°C sous agitation à 300 tours/min. On introduit ensuite dans le réacteur la cire Fischer-Tropsch. Le contenu du réacteur est maintenu à 165°C sous agitation à 300 tours/min pendant 1 heure.

Les préparations des bitumes **B₃** et **B₄** sont réalisées en introduisant d'abord la base bitume **B₀** dans un réacteur à 160°C sous agitation à 300 tours/min. Ensuite, on ajoute l'acide sébacique (**B₃**) ou l'hydrazide (**B₄**) sous forme de granulés. Les mélanges sont agités pendant environ 1 heure à 160°C pour obtenir un aspect final homogène. Les mélanges sont refroidis à température ambiante.

Les préparations des bitumes **B₉** et **B₁₀** sont préparées à partir de la base bitume **B₅** de la même manière que la préparation de bitume **B₃**.

La préparation du bitume **B₁₁** est préparée à partir de la base bitume **B₆** de la même manière que la préparation de bitume **B₃**.

Pour le bitume **B₁₂**, on introduit dans un réacteur maintenu à 160°C et sous agitation à 300 tours/min, la base bitume **B₇**, puis on ajoute l'acide. Le mélange est agité pendant environ 1 heure à 160°C pour obtenir un aspect final homogène. Le mélange est refroidi à température ambiante.

Pour le bitume **B₁₃**, on introduit dans un réacteur maintenu à 160°C et sous agitation à 300 tours/min, la base bitume **B₈,** puis on ajoute l'acide. Le mélange est agité pendant environ 1 heure à 160°C pour obtenir un aspect final homogène. Le mélange est refroidi à température ambiante.

Les préparations des bitumes **B₁₄** et **B₁₅** sont préparées à partir de la base bitume **B₅** de la même manière que la préparation de bitume **B₃**.

### Etude des propriétés de vieillissement des bitumes B₀, B₃, B₅ et B₉

Les vieillissements des bitumes **B₀** et **B₃** ainsi que des bitumes **B₅** et **B₉** ont été étudiés selon le protocole suivant: **B₀**, **B₃**, **B₅** et **B₉** subissent un premier vieillissement selon la méthode RTFOT (Rolling Thin Film Oven Test) tel que décrit dans la norme NF EN 12607-1 puis sont soumis à un second test basé sur le principe du test PAV (Pressure Aging Vessel) tel que décrit dans la norme ASTM D6521.

Les propriétés de résistance au vieillissement des bitumes **B₀** et **B₃** et des bitumes **B₅** et **B₉** mesurées selon les normes citées ci-dessus sont consignées dans le tableau 3 suivant :

**Tableau 3**

| Bitume | | **Bo** | **B₃** | **Bs** | **B₉** |
|---|---|---|---|---|---|
| P₂₅ (1/10 mm) | | 34 | 25 | 58 | 31 |
| Viscosité Cylindre (Pa.s) à : | | | | | |
| | - 120°C | 1,940 | 1,965 | 1,92 | 1,91 |
| | - 130°C | 1,030 | 0,991 | 1,08 | 0,95 |
| | - 140°C | 0,620 | 0,535 | 0,62 | 0,59 |
| | - 150°C | 0,375 | 0,360 | 0,41 | 0,35 |
| | - 160°C | 0,224 | 0,230 | 0,24 | 0,21 |

| **Après vieillissement RTFOT** | | | | | |
|---|---|---|---|---|---|
| P₂₅ (1/10 mm) | | 25 | 21 | 31 | 31 |
| Viscosité Cylindre (Pa.s) à : | | | | | |
| | - 120°C | 3,140 | 3,279 | 3,38 | 3,67 |
| | - 130°C | 1,610 | 1,621 | 1,74 | 1,94 |
| | - 140°C | 0,898 | 0,942 | 1,01 | 1,06 |
| | - 150°C | 0,537 | 0,564 | 0,58 | 0,64 |
| | - 160°C | 0,343 | 0,352 | 0,39 | 0,38 |

| **Après vieillissement RTFOT et PAV** | | | | | |
|---|---|---|---|---|---|
| P₂₅ (1/10 mm) | | 18 | 19 | 23 | 21 |
| Température d'isomodule à 300 MPa (°C) | | -12,6 | -13,0 | -16,1 | -15,6 |
| Pente à la température d'isomodule à 300 MPa | | 0,273 | 0,266 | 0,288 | 0,28 |
| Température critique (m=0,300) (°C) | | -8,5 | -8,4 | -14,2 | -13,3 |

Les bitumes **B₃** et **B₉** présentent respectivement des propriétés de résistance au vieillissement équivalentes aux bases bitumes **B₀** et **B₅** non additivées. Les valeurs de viscosité des bitumes **B₃** et **B₉** restent quasiment identiques respectivement par rapport à celles des bases bitumes **B₀** et **B₅**. La maniabilité des bitumes **B₃** et **B₉** à chaud reste donc inchangée respectivement par rapport aux bases bitumes **B₀** et **B₅**.

Par ailleurs, les propriétés des bitumes **B₃** et **B₉** selon l'invention ne sont pas affectées après vieillissement RTFOT. Le test RTFOT montre que les pénétrabilités diminuent moins dans les bitumes **B₃** et **B₉** que respectivement dans les bases bitumes de départ **B₀** et **B₅**, après vieillissement simulé.

Ainsi, l'ajout de l'acide sébacique aux bases bitumes **B₀** et **B₅** ne modifie pas leurs propriétés et permet donc d'obtenir un liant ayant les spécifications nécessaires pour une application routière.

### Préparation des pains de bitume P₁ à P₅ et P₉ à P₁₈

Des pains de bitume **P₁** à **P₅** et **P₉** à **P₁₅**, sont préparés à partir des bitumes **B₁** à **B₅** et **B₉** à **B₁₅** respectivement selon la méthode suivante. Une masse d'environ 0,5 kg de bitume est coulée à 160°C dans un moule rectangulaire en acier couvert d'un film thermofusible en polyéthylène. Le moule est ensuite refroidi à température ambiante puis démoulé.

Un pain de bitume **P₁₆** est préparé de manière industrielle par moulage à partir du bitume **B₉**. Des pains de bitumes **P₁₇** et **P₁₈** sont respectivement préparés à partir des pains de bitume concentrés **P₁₄** et **P₁₅**.

Pour obtenir le pain de bitume **P₁₇**, le pain de bitume **P₁₄** est fondu puis mélangé avec du bitume **B₅** de grade 50/70 préalablement chauffé à 160°C. Le mélange ainsi obtenu est agité pendant environ 1 heure à 160°C pour obtenir un aspect final homogène, puis coulé à 160°C dans un moule rectangulaire en acier couvert d'un film thermofusible en polyéthylène. Le moule est ensuite refroidi à température ambiante puis démoulé. Le pain de bitume **P₁₇** ainsi obtenu comprend environ 1,5% d'acide sébacique, c'est-à-dire que le ratio massique du mélange entre le pain **P₁₄** et le bitume **B₅** est de 1/5.

Le pain de bitume **P₁₈** est obtenu de la même manière que le pain de bitume **P₁₇** à partir d'un mélange entre le pain de bitume **P₁₅** et le bitume **B₅** avec un ratio massique du mélange entre le pain **P₁₅** et le bitume **B₅** de 1/16,6.

### Essai de fluage

Un essai de fluage qualitatif est préalablement réalisé. Les pains de bitume **P₁** à **P₅** et **P₉** à **P₁₃** ainsi obtenus sont placés dans des étuves à différentes températures et sous une charge de 3,65 kg (+/- 50 g) pour simuler l'empilement des pains les uns sur les autres, lors de leur transport et/ou leur stockage. En effet, on estime que 6 pains sont empilés verticalement sur une palette lors du transport et/ou du stockage des pains de bitume. Dès lors, la charge de 3,65 kg (+/- 50 g) correspondant à la charge appliquée sur un bloc de 500 g équivaut environ à la charge appliquée sur un bloc de 25 kg dans une palette contenant 40 blocs et ayant une masse totale d'environ 1000 kg.

La formule mathématique permettant de calculer la charge pour un bloc de 25 kg au sein d'une palette de 40 blocs est P = [(M^{∗}g)/S]/n
avec M étant la charge soit environ 1000 kg, g étant la constante gravitationnelle de 9,81 m·s⁻², S étant la surface de la palette soit de 1,21 m² et n étant le nombre de bloc dans la palette soit 40.

Les blocs sont d'abord placés en étuve à une température de 40°C. Si aucun fluage n'est observé après un certain temps, au maximum après 3 semaines, de nouveaux pains sont moulés et placés à une température d'étuve de 50°C pendant au minimum 7 jours. Cette opération est répétée en augmentant la température de 10°C jusqu'à une température maximale de 80°C si aucun fluage n'est observé, ou jusqu'à la température où un fluage important des pains est observé si ladite température est inférieure à 80°C. Le fluage se traduit visuellement par une déformation des pains et un écoulement du bitume.

Le tableau 4 ci-dessous répertorie les résultats de l'essai de fluage obtenus pour les différents pains de bitume.

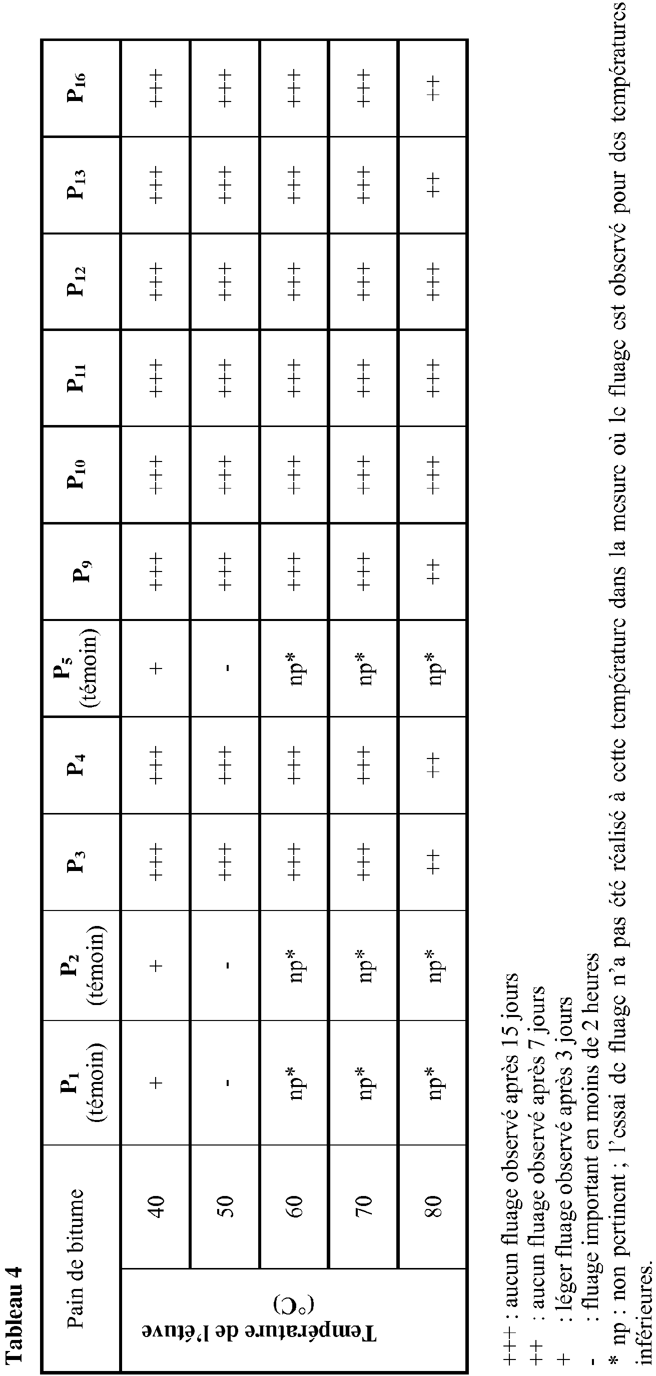

Seuls les pains de bitume P₃ et P₄ ainsi que les pains de bitume P₉ á P₁₃ et P₁₆ selon le présente invention ne fluent pas dans les conditions de stockage er/ou de transport conventionnelles.

### Essai de résistance au fluage

Cet essai est mis en œuvre afin d'évaluer la résistance à la déformation de chaque pain de bitume **P₁** à **P₅, P₇** et **P₈** obtenus respectivement à partir des bases bitumes **B₇** et **B₈** ainsi que **P₉** à **P₁₃**, **P₁₇** et **P₁₈** lorsque celui-ci est soumis à une charge et à une température de 50°C.

L'essai de résistance au fluage proprement dit est réalisé à l'aide d'un analyseur de texture commercialisé sous le nom LF Plus par la société LLOYD Instruments et équipé d'une enceinte thermique. Pour ce faire, on place une boîte métallique et cylindrique contenant une masse de 60 g de pain de bitume à l'intérieur de l'enceinte thermique réglée à une température de 50°C pendant 3 heures. Le piston de l'analyseur de texture est un cylindre de diamètre égal à 20 mm et de hauteur 60 mm. Le piston cylindrique est au départ placé au contact de la surface supérieure du pain de bitume. Ensuite, il se déplace verticalement vers le bas, à une vitesse constante de 1 mm/min, sur une distance calibrée de 10 mm de manière à exercer une force de compression sur la surface supérieure du pain de bitume. L'analyseur de texture mesure la force maximale de compression appliquée par le piston sur le pain de bitume à 50°C. La mesure de la force maximale de compression permet d'évaluer la capacité du pain de bitume à résister à la déformation. Ainsi, plus cette force est importante, meilleure sera la résistance à la déformation du pain de bitume.

Les résultats sont répertoriés dans le tableau 5 ci-dessous.

**Tableau 5**

| | | | | | | | | |
|---|---|---|---|---|---|---|---|---|
| Pain de bitume | **P₁ (témoin)** | **P₂ (témoin)** | **P₃** | **P₄** | **P₅ (témoin)** | **P₉** | **P₁₀** | **P₁₁** |
| Force maximale de compression (N) | 3,95 | 4,40 | 43,6 | 110,84 | 3,6 | 40,4 | 31,3 | 43,6 |
| Pain de bitume | **P₇ (témoin)** | **P₈ (témoin)** | **P₁₂** | **P₁₃** | **P₁₆** | **P₁₇** | **P₁₈** | |
| Force maximale de compression (N) | 1,9 | 4 | 139 | 73 | 40,4 | 21,5 | 19 | |

Bien que les valeurs du couple pénétrabilité P₂₅ et TBA des pains de bitume **P₁** à **P₅**, **P₉** à **P₁₁** et **P₁₆** sont équivalentes, ces dernières se comportent différemment face à la déformation. Il en est de même pour les valeurs du couple pénétrabilité P₂₅ et TBA des pains de bitume **P₁₂** et **P₁₃** par rapport aux pains de bitume témoin **P₇** et **P₈**. En effet, on estime qu'un pain de bitume est suffisamment résistant au fluage lorsque la force maximale de compression est au moins égale à 15 N à 50°C. Cette valeur de la force maximale de compression équivaut à des conditions de transport et/ou de stockage des pains de bitume à des températures au moins égales à 50°C. Ainsi, les pains **P₃**, **P₄**, **P₉** à **P₁₁** selon l'invention sont particulièrement résistants au fluage comparativement aux pains de bitume témoins **P₁**, **P₂** et **P₅**. Il en est de même pour les pains de bitume **P₁₂** et **P₁₃**, qui sont particulièrement résistants par rapport aux pains de bitume témoin **P₇** et **P₈**. En outre, le pain **P₄** contenant l'hydrazide et le pain **P₁₁** sont remarquables dans la mesure où les forces maximales de compression sont respectivement environ 25 fois plus importante et environ 70 fois plus importante que celle appliquée respectivement aux pains de bitume témoins **P₁** ou **P₂** et **P₇** qui auront tendance à fluer lors de leur transport ou de leur stockage, notamment à des températures supérieures ou égales à 40°C, de préférence supérieures ou égales à 50°C, plus préférentiellement supérieures ou égales à 60°C.

De plus, les pains de bitume **P₁₇** et **P₁₈** sont résistants au fluage à des températures au moins égales à 50°C étant donné que leur force maximale de compression est supérieure à 15N, c'est-à-dire est respectivement de 21,5N et de 19N. Les forces de compressions des pains de bitume **P₁₇** et **P₁₈** sont au moins 5 fois supérieures à la force de compression du pain de bitume témoin **P₅**.

On observe que la dilution des pains de bitume concentrés **P₁₄** et **P₁₅** pour obtenir les pains de bitume **P₁₇** et **P₁₈** ne provoque pas de détérioration de la résistance au fluage desdits pains de bitumes. Les pains de bitume **P₁₇** et **P₁₈** obtenus par dilution de pain de bitume concentré présentent des résistances au fluage proches des pains de bitume obtenus directement, c'est-à-dire sans étape de dilution de pain de bitume concentré, tels que les pains de bitume **P₃** et **P₁₀**. Dès lors, les pains de bitume **P₁₇** et **P₁₈** obtenus par une voie dite « indirecte » (concentration puis dilution) ne fluent pas lors de leur transport ou de leur stockage, notamment à des températures supérieures ou égales à 40°C, de préférence supérieures ou égales à 50°C, plus préférentiellement supérieures ou égales à 60°C contrairement au pain de bitume témoin **P₅**.

Ainsi, les pains de bitume selon l'invention ne collent pas entre eux et gardent leur forme et leur consistance même à température ambiante élevée. Ainsi, le transport et/ou le stockage sont optimisés pour les pains de bitume selon l'invention, avec une manipulation facilitée, sécurisée et des pertes de bitume minimisées.

### Etude des propriétés des enrobés bitumineux E₀ et E₃

Des enrobés **E₀**, **E₃**, **E₅** et **E₉** ont été préparés respectivement à partir des bitumes **B₀**, **B₃**, **B₅** et **B₉**.

Les enrobés **E₀**, **E₃**, **E₅** et **E₉** comprennent respectivement 5,4% en masse de bitume **B₀**, **B₃**, **B₅** et **B₉** et 94,6% en masse de granulats, lesdits pourcentages étant calculés par rapport à la masse de l'enrobé bitumineux.

Les enrobés sont préparés par mélange des bitumes et des granulats à 165°C selon un procédé conventionnel.

Les propriétés des enrobés **E₀**, **E₃**, **E₅** et **E₉** mesurées ci-dessus sont consignées dans le tableau 6 suivant :

**Tableau 6**

| **Enrobé** | **E₀** | **E₃** | **E₅** | **E₉** |
|---|---|---|---|---|
| **Essai Duriez** ⁽¹⁾ | | | | |
| Teneur en vides (%) | 10,3 | 9,8 | 9,8 | 9,8 |
| r (MPa) | 8,7 | 10,9 | 7,6 | 9,0 |
| R (MPa) | 10,5 | 12,8 | 8,8 | 10,4 |
| r/R (%) | 83 | 85,3 | 86 | 87 |

| **Orniérage** ⁽²⁾ | | | | |
|---|---|---|---|---|
| Teneur en vides (%) | 6,6 | 6,8 | 7,0 | 6,8 |
| Profondeur d'ornières à 30000 cycles (%) | 3,5 | 3,6 | 6,0 | 3,7 |

| **Fissuration à basse température (TSRST)** ⁽³⁾ | | | | |
|---|---|---|---|---|
| Température de fissuration (°C) | -24,6 | -23,0 | -27 | -26,7 |
| Contrainte à la fissuration (MPa) | 4,38 | 4,20 | 4,55 | 4,4 |

| **Module à 15°C, 10 Hz, éprouvettes trapézzoidales** ⁽⁴⁾ | | | | |
|---|---|---|---|---|
| Teneur en vide (%) | 3,7 | 3,6 | 3,8 | 3,9 |
| Module (MPa) | 11700 | 11700 | 8800 | 9300 |

| **Fatigue à 10°C** ⁽⁵⁾ | | | | |
|---|---|---|---|---|
| Teneur en vide (%) | 4,0 | 3,8 | 3,7 | 3,9 |
| ε 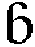 µdef | 124 | 135 | 140 | 130 |

| | | | | |
|---|---|---|---|---|
| ⁽¹⁾ Essai de résistance au désenrobage à l'eau selon la norme NF EN 12697-12 (méthode B) ⁽²⁾ Essai de résistance à l'orniérage selon la norme NF EN 12697-22 ⁽³⁾ Essai de fissuration à basse température selon la norme NF EN 12697-46 ⁽⁴⁾ Module des enrobés selon la norme NF EN 12697-26 ⁽⁵⁾ Fatigue des enrobés selon la norme NF EN 12697-24 | | | | |

Les enrobés réalisés avec un bitume selon l'invention comme liant routier présentent des propriétés identiques comparativement aux enrobés de l'art antérieur **E₀** et **E₅.** L'ajout d'un ou plusieurs additifs selon l'invention dans un bitume n'affecte pas les propriétés des enrobés réalisés à partir de tel bitume.

Ainsi, pour chaque essai réalisé, les teneurs en vides sont comparables pour **E₀** et **E₃** ainsi que pour **E₅** et **E₉**, ce qui traduit une maniabilité équivalente. Cette observation est cohérente puisque les bitumes **B₀** et **B₃** ainsi que les bitumes **B₅** et **B₉** présentent des viscosités comparables entre 120°C et 160°C (cf. tableau 3). En outre, les valeurs de résistance r et R sont plus élevées pour les enrobés **E₃** et **E₉** que pour les enrobés **E₀** et **E₅.**

Les propriétés en module et fatigue de l'enrobé **E₃** et **E₉** sont très satisfaisantes comparativement respectivement aux enrobés **E₀** et **E₅.**

## Revendications

1. Procédé de transport et/ou de stockage de bitume routier à froid, ledit procédé comprenant la fabrication de pains de bitume à partir du bitume routier puis le transport et/ou le stockage sous forme de pain de bitume, le bitume routier comprenant
- au moins une base bitume ayant une pénétrabilité, mesurée à 25°C selon la norme EN 1426, comprise entre 5 et 300 1/10 mm, et
- de 0,1% à 30% en masse d'au moins un additif chimique choisi parmi :
• un composé diacide de formule générale: HOOC-C_{w}H_{2w}-COOH dans laquelle w est un entier variant de 4 à 22, et
• un composé de formule générale (**II)** : R-CONH-NHCO-R' dans laquelle:
- R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes.

2. Procédé selon la revendication 1, dans lequel ledit bitume routier est transporté et/ou stocké à une température inférieure à 100°C.

3. Procédé selon l'une des revendications 1 et 2, dans lequel ledit bitume routier est transporté et/ou stocké à une température comprise entre 20°C et 90°C, de préférence comprise entre 20°C et 80°C, plus préférentiellement comprise entre 40°C et 80°C, encore plus préférentiellement comprise entre 50°C et 70°C, encore plus préférentiellement comprise entre 40°C et 60°C.

4. Procédé selon l'une quelconque des revendications 1 à 3, dans lequel ledit composé est un diacide de formule générale HOOC-C_{w}H_{2w}-COOH dans laquelle w est un entier variant de 4 à 22.

5. Procédé selon la revendication 4, dans lequel ledit composé est un diacide de formule générale HOOC-C_{w}H_{2w}-COOH dans laquelle w est un entier variant 4 à 12.

6. Procédé selon l'une des revendications 4 et 5, dans lequel ledit composé est un diacide choisi parmi le groupe constitué par l'acide adipique, l'acide pimélique, l'acide subérique, l'acide azélaique, l'acide sébacique, l'acide undécanedioïque, l'acide 1,12-dodécanedioïque et l'acide tétradécanedioïque.

7. Procédé selon la revendication 6, dans lequel ledit composé est l'acide sébacique.

8. Procédé selon l'une quelconque des revendications 1 à 3, dans lequel l'additif chimique est un composé de formule générale (**II)** .

9. Procédé selon la revendication 8, dans lequel lesdits groupements R et/ou R', identiques ou différents, comprennent un ou plusieurs cycles ou hétérocycles mono- ou polycycliques aromatiques éventuellement substitués par une ou plusieurs fonctions hydroxyle et/ou une ou plusieurs chaînes hydrocarbonées saturées, linéaires ou ramifiées, ayant de 1 à 6 atomes de carbone.

10. Procédé selon l'une quelconque des revendications 8 à 9, dans lequel lesdits groupements R et/ou R', identiques ou différents, comprennent une chaîne hydrocarbonée aliphatique de 4 à 22 atomes de carbone, notamment choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

11. Procédé selon l'une quelconque des revendications 8 à 10, dans lequel ledit composé est le 2',3-bis[[3-[3,5-di-tert-butyl-4-hydroxyphenyl]propionyl]] propionohydrazide.

12. Procédé selon l'une quelconque des revendications 1 à 11, dans lequel le bitume routier comprend de 0,1% à 5% en masse, de préférence de 0,5% à 4% en masse, plus préférentiellement de 0,5% à 2,5% en masse dudit additif chimique par rapport à la masse totale dudit bitume.

13. Procédé selon l'une quelconque des revendications 1 à 11, dans lequel le bitume routier comprend de 5% à 30% en masse, de préférence de 6% à 28% en masse, plus préférentiellement de 7% à 26% en masse de l'additif chimique par rapport à la masse totale dudit bitume.

14. Procédé selon l'une quelconques des revendications 1 à 13, dans lequel le bitume routier comprend entre 0,05% et 15% en masse, de préférence entre 0,1% et 10% en masse, plus préférentiellement entre 0,5% et 6% en masse d'un adjuvant polymère oléfinique.

15. Procédé de fabrication de liant routier, comprenant le transport et/ou le stockage de bitume sous forme de pains de bitume selon l'une quelconque des revendications 1 à 14 et l'utilisation de ces pains de bitume comme liant routier, de préférence pour la fabrication d'enrobés.

## Patentansprüche

1. Verfahren zum Transport und/oder zur Lagerung von Straßenbau-Kaltbitumen, wobei das Verfahren die Herstellung von Bitumenblöcken aus Straßenbaubitumen und dann den Transport und/oder die Lagerung in Bitumenblockform umfasst, wobei das Straßenbaubitumen Folgendes umfasst:
- mindestens einen Bitumengrundstoff mit einer bei 25 °C gemäß der Norm EN 1426 gemessenen Penetrierbarkeit zwischen 5 und 300 1/10 mm und
- 0,1 Gew.-% bis 30 Gew.-% mindestens eines chemischen Additivs, das ausgewählt ist aus:
• einer zweibasigen Säureverbindung der allgemeinen Formel: HOOC-C_{w}H_{2w}-COOH, wobei w eine ganze Zahl von 4 bis 22 ist, und
• einer Verbindung der allgemeinen Formel (II): R-CONH-NHCO-R', wobei:
- R und R', die gleich oder verschieden sind, eine gesättigte oder ungesättigte, lineare oder verzweigte, cyclische oder acyclische Kohlenwasserstoffkette mit 1 bis 22 Kohlenstoffatomen enthalten und gegebenenfalls Heteroatome und/oder Cyclen mit 3 bis 12 Atomen und/oder Heterocyclen mit 3 bis 12 Atomen enthalten.

2. Verfahren nach Anspruch 1, wobei das Straßenbaubitumen bei einer Temperatur von weniger als 100 °C transportiert und/oder gelagert wird.

3. Verfahren nach einem der Ansprüche 1 und 2, wobei das Straßenbaubitumen bei einer Temperatur zwischen 20 °C und 90 °C, vorzugsweise zwischen 20 °C und 80 °C, bevorzugter zwischen 40 °C und 80 °C, noch bevorzugter zwischen 50 °C und 70 °C, noch bevorzugter zwischen 40 °C und 60 °C, transportiert und/oder gelagert wird.

4. Verfahren nach einem der Ansprüche 1 bis 3, wobei die Verbindung eine zweibasige Säure der allgemeinen Formel HOOC-C_{w}H_{2w}-COOH ist, wobei w eine ganze Zahl von 4 bis 22 ist.

5. Verfahren nach Anspruch 4, wobei die Verbindung eine zweibasige Säure der allgemeinen Formel HOOC-C_{w}H_{2w}-COOH ist, wobei w eine ganze Zahl von 4 bis 12 ist.

6. Verfahren nach einem der Ansprüche 4 und 5, wobei die Verbindung eine zweibasige Säure ist, die ausgewählt ist aus der Gruppe bestehend aus Adipinsäure, Pimelinsäure, Korksäure, Azelainsäure, Sebacinsäure, Undecandisäure, 1,12-Dodecandisäure und Tetradecandisäure.

7. Verfahren nach Anspruch 6, wobei die Verbindung Sebacinsäure ist.

8. Verfahren nach einem der Ansprüche 1 bis 3, wobei das chemische Additiv eine Verbindung der allgemeinen Formel (II) ist.

9. Verfahren nach Anspruch 8, wobei die Gruppen R und/oder R', die gleich oder verschieden sind, einen oder mehrere mono- oder polycyclische aromatische Cyclen oder Heterocyclen, die gegebenenfalls durch eine oder mehrere Hydroxylfunktionen substituiert sind, und/oder eine oder mehrere lineare oder verzweigte gesättigte Kohlenwasserstoffketten mit 1 bis 6 Kohlenstoffatomen umfassen.

10. Verfahren nach einem der Ansprüche 8 bis 9, wobei die Gruppen R und/oder R', die gleich oder verschieden sind, eine aliphatische Kohlenwasserstoffkette mit 4 bis 22 Kohlenstoffatomen umfassen, die insbesondere aus den Gruppen C₄H₉, C₅H₁₁, C9H19, C₁₁H₂₃, C₁₂H₂₅, C₁₇H₃₅, C₁₈H₃₇, C₂₁H₄₃, C₂₂H₄₅ ausgewählt ist.

11. Verfahren nach einem der Ansprüche 8 bis 10, wobei die Verbindung 2',3-Bis[[3-[3,5-di-tert-butyl-4-hydroxyphenyl]propionyl]]propionohydrazid ist.

12. Verfahren nach einem der Ansprüche 1 bis 11, wobei das Straßenbaubitumen 0,1 Gew.-% bis 5 Gew.-%, vorzugsweise 0,5 Gew.-% bis 4 Gew.-%, bevorzugter 0,5 Gew.-% bis 2,5 Gew.-%, des chemischen Additivs, bezogen auf das Gesamtgewicht des Bitumens, umfasst.

13. Verfahren nach einem der Ansprüche 1 bis 11, wobei das Straßenbaubitumen 5 Gew.-% bis 30 Gew.-%, vorzugsweise 6 Gew.-% bis 28 Gew.-%, bevorzugter 7 Gew.-% bis 26 Gew.-%, des chemischen Additivs, bezogen auf das Gesamtgewicht des Bitumens, umfasst.

14. Verfahren nach einem der Ansprüche 1 bis 13, wobei das Straßenbaubitumen zwischen 0,05 Gew.-% und 15 Gew.-%, vorzugsweise zwischen 0,1 Gew.-% und 10 Gew.-%, bevorzugter zwischen 0,5 Gew.-% und 6 Gew.-%, eines olefinischen polymeren Zusatzstoffs umfasst.

15. Verfahren zur Herstellung eines Straßenbaubindemittels, das den Transport und/oder die Lagerung von Bitumen in Form von Bitumenblöcken nach einem der Ansprüche 1 bis 14 und die Verwendung dieser Bitumenblöcke als Straßenbaubindemittel, vorzugsweise zur Herstellung von Straßendecken, umfasst.

## Claims

1. Process for the transportation and/or storage of road bitumen under cold conditions, said method comprising manufacturing bitumen blocks from the road bitumen and the transport and/or storage under the form of bitumen blocks, the road bitumen comprising
- at least one bitumen base having a penetrability, measured at 25°C according to standard EN 1426, of between 5 and 300 1/10 mm, and
- from 0.1% to 30% by weight of at least one chemical additive chosen from:
• a diacid compound of general formula HOOC-C_{w}H_{2w}-COOH, in which w is an integer ranging from 4 to 22, and
• a compound of general formula **(II)**: R-CONH-NHCO-R' in which:
- R and R', which are identical or different, contain a saturated or unsaturated, linear or branched, cyclic or acyclic hydrocarbon-based chain having from 1 to 22 carbon atoms and optionally comprising heteroatoms and/or rings having from 3 to 12 atoms and/or heterocycles having from 3 to 12 atoms.

2. Process according to Claim 1, in which said road bitumen is transported and/or stored at a temperature of less than 100°C.

3. Process according to either of Claims 1 and 2, in which said road bitumen is transported and/or stored at a temperature of between 20°C and 90°C, preferably of between 20°C and 80°C, more preferentially of between 40°C and 80°C, even more preferentially of between 50°C and 70°C, even more preferentially of between 40°C and 60°C.

4. Process according to any one of Claims 1 to 3, in which said compound is a diacid of general formula HOOC-C_{w}H_{2w}-COOH, in which w is an integer ranging from 4 to 22.

5. Process according to Claim 4, in which said compound is a diacid of general formula HOOC-C_{w}H_{2w}-COOH, in which w is an integer ranging from 4 to 12.

6. Process according to either of Claims 4 and 5, in which said compound is a diacid chosen from the group consisting of adipic acid, pimelic acid, suberic acid, azelaic acid, sebacic acid, undecanedioic acid, 1,12-dodecanedioic acid and tetradecanedioic acid.

7. Process according to claim 6, in which said compound is sebacic acid.

8. Process according to any one of Claims 1 to 3, in which said compound is a compound of general formula **(II)**.

9. Process according to claim 8, in which said R and/or R' groups, which are identical or different, comprise one or more aromatic monocyclic or polycyclic rings or heterocycles, optionally substituted by one or more hydroxyl functions and/or one or more saturated, linear or branched hydrocarbon-based chains, having from 1 to 6 carbon atoms.

10. Process according to any one of claims 8 and 9, in which said R and/or R' groups, which are identical or different, comprise an aliphatic hydrocarbon-based chain having 4 to 22 carbon atoms, especially chosen from the groups C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

11. Process according to any one of Claims 8 to 10, in which said compound is 2',3-bis[[3-[3,5-di-tert-butyl-4-hydroxyphenyl]propionyl]]propionohydrazide.

12. Process according to any one of Claims 1 to 11, in which the road bitumen comprises from 0.1% to 5% by weight, preferably from 0.5% to 4% by weight, more preferentially from 0.5% to 2.5% by weight of said chemical additive relative to the total weight of said bitumen.

13. Process according to any one of Claims 1 to 11, in which the road bitumen comprises from 5% to 30% by weight, preferably from 6% to 28% by weight, more preferentially from 7% to 26% by weight of the chemical additive relative to the total weight of said bitumen.

14. Process according to any one of Claims 1 to 13, in which the road bitumen comprises between 0.05% and 15% by weight, preferably between 0.1% and 10% by weight, more preferentially between 0.5% and 6% by weight of an olefinic polymer adjuvant.

15. Process for manufacturing a road binder, comprising the transport and/or storage of bitumen under the form of bitumen blocks according to any one of Claims 1 to 14 and the use of said bitumen blocks as road binder, preferably for manufacturing mixes.
